# EUROPEAN PATENT SPECIFICATION

(11) **EP 1 708 931 B1**
(45) Date of publication and mention of the grant of the patent: **08.08.2007**
(21) Application number: 04702757.8
(22) Date of filing: 16.01.2004
(51) Int. Cl.: B65D 51/24, B65D 5/42

(54) **STORAGE UNIT WITH IDENTIFYING MARKINGS**
LAGERUNGSEINHEIT MIT IDENTIFIZIERUNGSMARKIERUNGEN
UNITE DE STOCKAGE POURVUE DE MARQUES D'IDENTIFICATION

(30) Priority: 28.10.2003 HU 0303536
(43) Date of publication of application: 11.10.2006
(73) Proprietor: COPTHORNE TRADING LTD., Isles of Man British Isles (GB)
(72) Inventor: LÁSZLÓ, Endre, Márton, 1081 Budapest (HU); RÁDAI, Miklós, 1111 Budapest (HU); SOMOGYI, Miklós, 1028 Budapest (HU)
(74) Representative: Faber, Miklos
(86) International application number: PCT/HU2004/000002
(87) International publication number: WO 2005/040001

(56) References cited:
- EP-A- 0 787 656
- GB-A- 2 242 396
- US-A- 3 628 271
- US-A- 5 762 263

## Description

The subject of this invention relates to a storage unit with identifying markings, consisting of a receptacle that encloses a storage area that receives the material to be stored, an opening in the receptacle leading to the storage area, and a closure member that may be secured temporarily over the opening.

In recent times, as packaging technology has developed, it has become increasingly common to associate the purchase of products packaged in storage units for distribution, such as beverages, with a contest for prizes. The essence of the competition is that a particular marking is placed at quite an inaccessible place on the storage unit, such as on the inside of the closure cap, so that it becomes visible only once the packaging has been opened. The purchaser can check whether he or she has won a prize by examining the component of the packaging, such as the closure cap that bears the marking.

Other applications of identifying markings include those where data regarding the date of manufacture or other information relating to the packaging or content of the storage unit is indicated. Today, purchasers generally check this data by visual inspection, as in the previous example.

Two disadvantages of such solutions are that the examination of markings requires the expenditure of a significant amount of human work, and that there is a high probability of a mistake's being made in reading the markings, which may result in considerable loss or damage.

Another disadvantage is that the identifying markings must be located in various places depending on the particular objective. Thus, it is a good idea for prize identifiers associated with advertising objectives to be placed in a location that is difficult to access, while information used to identify goods must be placed so that is easy to detect. These different requirements demand different technologies, which increase manufacturing and packaging costs, and thus, indirectly, the price of the product to the consumer.

An example of the marking versions used at present is shown in U.S. Pat. No. 6,059,133, which involves the use of a certain marking system on the container cap of the bottle that forms a part of the overall storage unit, and the fixing of an accessory piece to the bottle. This accessory element is a rotatable part-unit with a window, so that when the assembly is rotated, only a detail of the marking system is visible in the window at any particular point.

The basic disadvantages of this construction are that it is a complicated mechanism and that the fixing of the moving part in a particular place needs further steps in terms of manufacturing technology. Also any damage to the container cap will render the markings completely unidentifiable.

A further disadvantage is that it is difficult to recognise the markings appearing within the window because of the size of the container cap and the design of the marking system. In order for a machine to recognise the markings, the component that carries the markings must be turned in a particular direction, which makes reliable reading of the identifying marks even more problematic.

The patent specifications registered under U.S. Pat. Nos. 4,372,457 and 4,151,924 describe solutions that may be used for individual identification, but which are based on different fundamental principles. With these inventions the identifying marking is carried by an insert made from a material different from that of the closure cap, affixed to the interior of the same. The drawback to this solution is that the production of a separate insert to carry the identifying marking and the securing of this liner to the closure cap increases the manufacturing costs, as well as the number of steps employed, which in turn increases the overall production costs associated with the product.

Another disadvantage is that for caps that can be redeemed for prizes, the removable insert may be forged, raising numerous additional concerns related to illegal gains.

A solution including a cap for closing bottles provided with identifying marking is also described in patent description No. US 3.628.271. In this case the identifying marking is formed by a sequence of signs consisting of arranged elements, applied to the cap with the help of some typographical procedure.

In accordance with this the manufacturing of the sequence of signs requires expensive aids and recording technology ; and a complicated reading device is needed for identifying the sign on the closure member.

A further general drawback that applies to all identifying marks applied using known methods in or onto the components used to close or seal storage units is that in designing markings for protected places so that they cannot be accessed without damaging the product packaging, many issues related to hygiene in regard of food industry products must be taken into account, a circumstance that further complicates the process of implementing an acceptable solution.

With the current invention, the objective was to create a storage unit with identifying markings that eliminates the deficiencies inherent in other solutions, is easy to manufacture and assemble, does not require alteration of the procedures and equipment used in conventional packaging technology and provides a method for creating appropriately protected identifying markings that cannot be forged and that can be machine-checked without any particular difficulty.

The present invention is based on the recognition that if we include particles of a marking material over the covering surface of the closure member of the storage unit whose random distribution produces a unique and irreproducible electromagnetic response radiation image in the space surrounding the storage unit that is specific to the closure member of the storage unit, then each particular radiation image may be used to identify a particular storage unit, and thus solves the task.

In accordance with the stated objective, the storage unit with identifying markings according to this invention, which is composed of a receptacle that encloses the storage area receiving the material to be stored, an opening in the receptacle leading to the storage area, and a closure member that may be temporarily fixed over the opening, and which is constructed so that the identifying markings are formed by a group of particles of a marking material which creates a unique electromagnetic response image arranged in a random distribution over the covering surface of the closure member.

A further criterion that might be applied to the storage unit is that the wavelength of the electromagnetic response radiation of the particles of the marking material used falls within a range of 0.71 nm to 3 812 nm.

In one possible embodiment of the storage unit the state at least some of the particles of the marking material are solid and/or at least some of the particles of the marking material are not solid, e.g. liquid or an amorphous solution.

In another embodiment of the invention, the closure member includes a front portion, which seals the opening in the receptacle, and a contiguous body portion equipped with a joining surface that extends from the front portion, the identifying markings are applied to the front portion and/or to the contiguous body portion.

Another aspect of the present invention, the closure member is formed as a coverplate and the identifying markings are applied to the coverplate.

In yet another embodiment of the storage unit, the receptacle has a covering that forms a surface corresponding to a solid of revolution or has a covering that forms a prismatic surface whose base is a polygon.

The storage unit according to this invention offers numerous advantages. The most significant one of these is that given the special nature of the marking material particles, a specific identifying mark can be created for each and every storage unit that is random, irreproducible, and displays a radiation image characteristic of one and only one storage unit.

A further advantage is that the marking material particles used to create the identifying markings can be mixed into the material of the closure member of the storage unit or can be applied to the surface of the closure member of the storage unit using known manufacturing processes, so that neither the technology used to manufacture the storage unit, nor the packaging processes, nor the packaging equipment need be changed in order to produce this method for unique identification.

The resulting advantage is that the product may be produced and packaged using conventional technologies and equipment without substantially increased production costs, while at the same time a product of added service value is created when the storage unit according to this invention is used, which can be applied both to promotional activities designed to encourage product purchase and to identifying the given product for other reasons.

Another advantage is that the storage unit according to this invention offers a method for implementing irreproducible and protected identifying markings, such that machine checking may be accomplished without any particular difficulty, using existing equipment known in itself. In this way, the checking of identifying markings through visual inspection can be significantly decreased, which results in reduced costs and minimises the number of possible errors.

Another property that must be considered advantageous is that the use of particles of a marking material to produce the identifying markings makes it impossible to determine from the packaging whether a product involved in a promotion designed to encourage purchase will yield a prize, and thus definitively eliminates instances of abuse.

Yet another further advantage is that the particles of the marking material may possess special additional properties, such as fluorescence or phosphorescence, thus producing a visual effect under certain conditions that may be used to enhance the commercial success of the product packaged in the storage unit according to this invention.

In the following section of this document, the storage unit according to the present invention is presented in greater detail through example embodiments and drawings. In the drawings,
Figure 1 shows a side view and a partial cross section of a possible embodiment of the closure member of the storage unit according to this invention,
Figure 2 shows a side view and a partial cross-section of a second embodiment of the closure member of the storage unit according to this invention,
Figure 3 shows a side view and a partial cross-section of another embodiment of the closure member of the storage unit according to this invention,
Figure 4 shows a side view and a partial cross-section of another embodiment of the storage unit according to this invention,

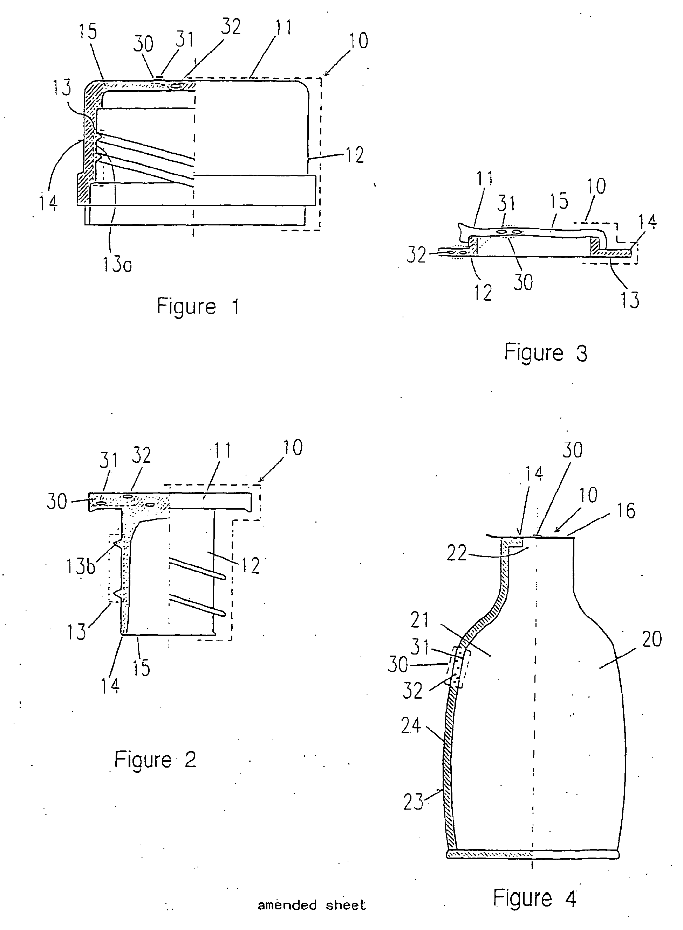

In Figure 1, one possible embodiment of the closure member 10 of the storage unit according to this invention is shown. The drawing shows that in this case the closure member 10 is a conventional plastic cap of the type generally used with soft drink containers. The closure member 10 possesses a front portion 11 and a contiguous body portion 12 extending from this, on the inside of this contiguous body portion 12 there is a joining surface 13. The joining surface 13 in this particular embodiment is a screw thread 13a.

Figure 1 also clearly shows that the particles of the marking material 31 and 32 forming the identifying marking 30 are mixed into the material 15 of the closure member 10. Here, the particles of the marking material 31 and 32 are grains in the solid state, e.g. metal filings, embedded in the material 15 of the closure member 10 in random distribution. The particles of marking material 31 and 32 are not only located in the material 15 of the closure member 10, but also on the covering surface 14 of the closure member 10. In the present case the particles of the marking material 31 and 32 creating the identifying markings 30 affect the homogenous electromagnetic field formed in the vicinity of the closure member 10 depending on their arrangement. Changes in an electromagnetic field are easy to measure, and thus, when the electromagnetic response from the closure member 10 is adequately recorded, each closure member 10 can be uniquely identified by means of a simple measurement.

Figure 2 shows another embodiment of the closure member 10 of the storage unit according to this invention. This variation on the closure member 10 is generally used to seal wine bottles. The closure member 10 in this figure is also composed of a front portion 11 and a cylindrical protruding, skirt-like contiguous body portion 12. On the contiguous body portion 12 there is also a joining surface 13 which, unlike the previous example, consists of rings 13b that encircle the outer surface of the contiguous body portion 12 and are arranged one above the other.

The particles of the marking material 31 and 32 that create the identifying markings 30 are to be found here in the material 15 of the closure member 10 and on the covering surface 14 as well. The difference is that in this case, during the course of production, the particles of the marking material 31 and 32 are mixed as a liquid colouring agent into the plastic granules that constitute the raw material from which the closure member 10 is made. In essence, in the course of manufacture, the colouring agent and raw material together form a solution. After the closure member 10 has been completed, the dissolved colouring agent appears in random distribution in the form of particles of the marking material 31 and 32 within the closure member 10, creating the given identifying markings 30 that characterise the closure member 10.

The particles of the marking material 31 and 32 that create the identifying markings 30 can be of a material that displays an image that, when illuminated using light of a wavelength in the visible range, can be detected by the human eye, or they may even be of a material for which ultraviolet (UV) or infrared (IR) light is necessary to make the particles of the marking material 31 and 32 of the identifying marking 30 detectable. In fact, it is conceivable that a fluorescent or phosphorescent marking material may be used. Naturally, the properties of the particles of marking material 31 and 32 that create the identifying marking 30 determine which procedure may be used to check and identify the closure member 10. The wavelength of the electromagnetic radiation emitted by the test device or the wavelength of the electromagnetic radiation test range of the measuring instrument must be selected so that it corresponds to the wavelength of the electromagnetic response emitted by the identifying markings 30. In any case, it is expedient to select the material that provides the particles of the marking material 31 and 32 that create the identifying markings 30 such that the possible wavelengths of the electromagnetic radiation of the particles of the marking material 31 and 32 or response radiation fall between 0.71 nm and 3812 nm.

Figure 3 presents another embodiment of the closure member 10, which in this case is a. plastic part such as those used on paper fruit juice boxes. Here the front portion 11 is joined to the contiguous body portion 12 in such a way that it may rotate, that is the front portion 11 and the contiguous body portion 12 can be displaced with respect to each other at least partially. In this embodiment of the closure member 10, the identifying markings 30 are formed of particles of a marking material 31 and 32 that are liquid inclusions embedded in the material 15 of the closure member 10. Of course, the identifying markings 30 formed by the particles of the marking material 31. and 32 are not visible on the covering surface 14 of the closure member 10, but due to the nature of the material involved, also alter the electromagnetic field that surrounds them in a unique way.

Here it must be noted that the particles of the marking material 31 and 32 forming the identifying markings 30 may differ from one another even within a single closure member 10, both in terms of their material and in terms of their matter state. In fact, it is possible to produce an embodiment for which the identifying markings 30 are applied exclusively on the covering surface 14 of the closure member 10, while for another embodiment, they are found only within the material 15 of the closure member 10, and in a third case (as was described earlier by means of examples), they appear both on the covering surface 14 of the closure member 10 and in its material 15.

It should also be emphasised, that the identifying markings 30 are not necessarily only carried specifically by the closure member 10 of the storage unit. Figure 4 shows a storage unit where in addition to the closure member 10, the receptacle 20 also has identifying markings 30 applied to it. Here, the receptacle 20 that encloses the storage space 21 is a plastic bottle with a covering surface 23 shaped as a solid of revolution whose opening 22 is covered by a closure member 10 containing a single tamper-proof foil sheet 16.

One of the identifying markings 30 is situated on the covering surface 14 of the closure member 10 as a foil sheet 16, while the other is formed of particles of the marking material 31 and 32 embedded in the material 24 of the receptacle 20 and is visible on the covering surface 23 of the receptacle 20. The particles of the marking material 31 and 32 may be identical to those discussed in conjunction with earlier specifications.

The storage unit according to this invention may be used effectively in all cases where packaged goods must be supplied, for whatever reason, with identifying markings that are unique, irreproducible and may be used for the purposes of inspection without the expenditure of extra human work.

## Claims

1. A storage unit with identifying markings which has a receptacle delimiting a given storage area for receiving the material to be stored, an opening positioned on the receptacle connected to the storage area and a closure member that may be affixed temporarily over the opening **characterised by** that the identifying markings (30) are formed by a group of marking material particles (31, 32) that create a unique electromagnetic response radiation image arranged in a random distribution over the covering surface (14) of the closure member (10).

2. The storage unit according to claim 1 **characterised by** that the wavelength range of the electromagnetic response produced by the marking material particles (31, 32) falls between 0.71 nm and 3812 nm.

3. The storage unit according to claim 1 or claim 2 **characterised by** that at least some of the marking material particles (31, 32) are in the solid state.

4. The storage unit according to any of claims 1 through 3 **characterised by** that at least some of the marking material particles (31, 32) are in a state other than the solid state, taking the form, for example, of a fluid or amorphous solution.

5. The storage unit according to any of claims 1 through 4 **characterised by** that the closure member (10) consists of a front portion (11) that seals the opening (22) of the receptacle (20) and a contiguous body portion (12) extending from the front portion (11), said contiguous body portion equipped with a joining surface (13) and the identifying markings (30) are applied to the front portion (11) and/or on the contiguous body portion (12).

6. The storage unit according to any of claims 1 through 4 **characterised by** that the closure member (10) is fashioned as a foil sheet (16) and the identifying markings (30) are applied to the foil sheet (16).

7. The storage unit according to any of claims 1 through 6 **characterised by** that the receptacle (20) has a covering surface (23) that takes the form of a solid of revolution.

8. The storage unit according to any of claims 1 through 6 **characterised by** that the receptacle (20) has a covering surface (23) that is prismatic and whose base is cornered.

## Patentansprüche

1. Speichereinheit mit Identifizierungsmarkierungen, aufweisend einen einen gegebenen Speicherraum zur Aufnahme des zu speichernden Materials abgrenzenden Behälter, eine am Behälter positionierte, mit dem Speicherraum verbundene Öffnung und ein Schließelement, das zeitweise über der Öffnung befestigt sein kann, **dadurch gekennzeichnet, dass** die Identifizierungsmarkierungen (30) von einer Gruppe von Markierungsmaterialpartikeln (31, 32) gebildet sind, die ein eindeutiges Bild elektromagnetischer Antwortstrahlung erzeugen, das in einer zufälligen Verteilung über der Deckfläche (14) des Schließelements (10) angeordnet ist.

2. Speichereinheit nach Anspruch 1, **dadurch gekennzeichnet, dass** der Wellenlängenbereich der von den Markierungsmaterialpartikeln (31, 32) erzeugten elektromagnetischen Antwort zwischen 0,71 nm und 3812 nm fällt.

3. Speichereinheit nach Anspruch 1 oder Anspruch 2, **dadurch gekennzeichnet, dass** sich zumindest einige der Markierungsmaterialpartikeln (31, 32) im festen Zustand befinden.

4. Speichereinheit nach einem der Ansprüche 1 bis 3, **dadurch gekennzeichnet, dass** sich zumindest einige der Markierungsmaterialpartikeln (31, 32) in einem anderen als dem festen Zustand befinden und beispielsweise die Form einer Flüssigkeit oder amorphen Lösung besitzen.

5. Speichereinheit nach einem der Ansprüche 1 bis 4, **dadurch gekennzeichnet, dass** das Schließelement (10) aus einem Vorderabschnitt (11), der die Öffnung (22) des Behälters (20) abdichtet, und einem sich vom Vorderabschnitt (11) erstreckenden zusammenhängenden Körperabschnitt (12) besteht, wobei der zusammenhängende Körperabschnitt mit einer Verbindungsfläche (13) versehen ist und die Identifizierungsmarkierungen (30) auf dem Vorderabschnitt (11) und/oder dem zusammenhängenden Körperabschnitt (12) aufgebracht sind.

6. Speichereinheit nach einem der Ansprüche 1 bis 4, **dadurch gekennzeichnet, dass** das Schließelement (10) als Folienblatt (16) gestaltet ist und die Identifizierungsmarkierungen (30) auf dem Folienblatt (16) aufgebracht sind.

7. Speichereinheit nach einem der Ansprüche 1 bis 6, **dadurch gekennzeichnet, dass** der Behälter (20) eine Deckfläche (23) aufweist, die die Form eines Rotationskörpers besitzt.

8. Speichereinheit nach einem der Ansprüche 1 bis 6, **dadurch gekennzeichnet, dass** der Behälter (20) eine Deckfläche (23) aufweist, die prismatisch ist und deren Grundfläche eckig ist.

## Revendications

1. Unité de stockage dotée de marquages d'identification qui possède un réceptacle délimitant une zone de stockage donnée destinée à recevoir la matière à stocker, une ouverture positionnée sur le réceptacle raccordé à la zone de stockage et un élément de fermeture qui peut être provisoirement fixé sur l'ouverture, **caractérisée en ce que** les marquages d'identification (30) sont formés par un groupe de particules (31, 32) de matière de marquage qui créent une image à radiation à réponse électromagnétique unique agencée selon une distribution aléatoire sur la surface couvrante (14) de l'élément de fermeture (10).

2. Unité de stockage selon la revendication 1, **caractérisée en ce que** la plage de longueurs d'onde de la réponse électromagnétique produite par les particules (31, 32) de matière de marquage se situe entre 0,71 nm et 3812 nm.

3. Unité de stockage selon la revendication 1 ou la revendication 2, **caractérisée en ce qu'**au moins certaines des particules (31, 32) de matière de marquage sont à l'état solide.

4. Unité de stockage selon l'une quelconque des revendications 1 à 3, **caractérisée en ce qu'**au moins certaines des particules (31, 32) de matière de marquage sont dans un état autre que l'état solide, en prenant par exemple la forme d'un liquide ou d'une solution amorphe.

5. Unité de stockage selon l'une quelconque des revendications 1 à 4, **caractérisée en ce que** l'élément de fermeture (10) se compose d'une partie avant (11) qui ferme l'ouverture (22) du réceptacle (20) et d'une partie formant corps (12) contiguë s'étendant depuis la partie avant (11), **en ce que** ladite partie formant corps contiguë est équipée d'une surface de raccordement (13) et les marquages d'identification (30) sont appliqués sur la partie avant (11) et/ou sur la partie formant corps (12) contiguë.

6. Unité de stockage selon l'une quelconque des revendications 1 à 4, **caractérisée en ce que** l'élément de fermeture (10) est conçu comme une feuille métallique (16) et les marquages d'identification (30) sont appliqués sur la feuille métallique (16).

7. Unité de stockage selon l'une quelconque des revendications 1 à 6, **caractérisée en ce que** le réceptacle (20) a une surface couvrante (23) qui prend la forme d'un solide de révolution.

8. Unité de stockage selon l'une quelconque des revendications 1 à 6, **caractérisée en ce que** le réceptacle (20) a une surface couvrante (23) qui est prismatique et dont la base est angulaire.
